Europäisches Patentamt

European Patent Office

Office européen des brevets

(11) Veröffentlichungsnummer: **0 338 394 B1**

# EUROPÄISCHE PATENTSCHRIFT

(45) Veröffentlichungstag der Patentschrift: **04.11.92**

(21) Anmeldenummer: **89106460.2**

(22) Anmeldetag: **12.04.89**

(51) Int. Cl.5: **H02K 5/22**, B60S 1/08

(54) **Elektromotor, insbesondere Wischermotor zum Antrieb einer Scheibenwischeranlage in einem Kraftfahrzeug.**

(30) Priorität: **19.04.88 DE 3812996**

(43) Veröffentlichungstag der Anmeldung:
**25.10.89 Patentblatt 89/43**

(45) Bekanntmachung des Hinweises auf die Patenterteilung:
**04.11.92 Patentblatt 92/45**

(84) Benannte Vertragsstaaten:
**ES FR GB IT SE**

(56) Entgegenhaltungen:
**EP-A- 0 154 930**
**DE-U- 7 115 761**
**FR-A- 2 375 738**

(73) Patentinhaber: **SWF Auto-Electric GmbH**
**Stuttgarter Strasse 119 Postfach 135**
**W-7120 Bietigheim-Bissingen(DE)**

(72) Erfinder: **Baumeister, Udo**
**Parkäckerstrasse 18**
**W-7120 Bietigheim-Bissingen(DE)**
Erfinder: **Bühler, Roland**
**Raiffeisenstrasse 9**
**W-7100 Heilbronn(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung geht aus Von einem Elektromotor, insbesondere von einem Wischermotor zum Antrieb einer Scheibenwischeranlage in einem Kraftfahrzeug, der die Merkmale aus dem Oberbegriff des Anspruchs 1 aufweist.

Ein aus der DE-AS 26 58 746 bekannter Wischermotor besitzt ein Getriebegehäuse einschließlich Deckel und mehrere, insbesondere im wesentlichen parallel zum Getriebegehäuse angeordnete Steckkontakte, von denen einzelne am Getriebegehäuse, insbesondere am Deckel fixiert sind und wenigstens ein anderer mit einer Motorstromzuleitung verbunden ist und in einem Steckergehäuse sitzt. Am Getriebegehäuse fixiert sind die Steckkontakte mit Hilfe eines am metallischen Deckel des Getriebegehäuses direkt angespritzten Kunststoffteils. Das Steckergehäuse, in das zwei Motorstromzuleitungen eingesetzt sind, wird von dem angespritzten Kunststoffteil getragen und ist an diesem befestigt. Bei dem bekannten Elektromotor sind alle Steckkontakte auch noch nach der Befestigung eines Gegensteckers Umwelteinflüssen, insbesondere auch Spritzwasser, weitgehend ungeschützt ausgesetzt. Auch kann das Getriebegehäuse in dem Bereich, in dem Steckkontakte an ihm fixiert sind, undicht sein.

Aus DE-U-7 115 761 ist ein elektrischer Scheibenwischermotor bekannt, dessen Getriebegehäuse durch einen abnehmbaren Kunststoffdeckel verschlossen ist. In diesen Kunststoffdeckel ist ein Glied einer Steckverbindungsvorrichtung integriert. Dieses integrale Anschlußsteckerglied verfügt über den Deckel durchgreifende Öffnungen, in welche elektrische Anschlußklemmen eingesetzt sind, die wiederum an der Deckelinnenseite mit Kontaktfedern verbunden sein können. Bei diesem Scheibenwischermotor ist die Montage der abgewinkelten Anschlußklemmen in dem bereits mit dem Gehäusedeckleine Einheit bildenden Steckergehäuse erschwert.

Der Erfindung liegt die Aufgabe zugrunde, einen Elektromotor so auszubilden, daß die Dichtheit des Getriebegehäuses und der Schutz der Steckkontakte vor Korrosion verbessert sind und daß eine einfache Montage der Steckkontakte gewährleistet ist.

Diese Aufgabe wird erfindungsgemäß dadurch gelöst, daß bei einem Elektromotor mit den Merkmalen aus dem Oberbegriff des Anspruchs 1 das Steckergehäuse eine Öffnung mit umlaufenden Rand aufweist, durch die die am Getriebegehäuse fixierten Steckkontakte in das Steckergehäuse gelangen, daß das Steckergehäuse das Halteteil völlig umschließt und um die Öffnung herum dicht am Getriebegehäuse anliegt.

Bei einem erfindungsgemäßen Elektromotor liegt also das Steckergehäuse direkt am Getriebegehäuse, insbesondere am Deckel des Getriebegehäuses, an. Damit ist der Bereich des Getriebegehäuses, in dem Steckkontakte am Getriebegehäuse fixiert sind, durch das Steckergehäuse vor einem direkten Zugang von Spritzwasser geschützt. Dadurch ist der Korrosionsschutz für die Steckkontakte verbessert. Auch ist eine bessere Dichtheit des Getriebegehäuses gewährleistet, das im Bereich der Steckerfixierung normalerweise Durchbrüche aufweist, durch die einzelne Steckkontakte in das Innere des Getriebegehäuses greifen oder die zur Verankerung des angespritzten Kunststoffteils dienen.

Außerdem gewährleistet ein erfindungsgemäßes Steckergehäuse dadurch eine einfache Montage der Steckkontakte, daß bereits vor dem Befestigen des Steckergehäuses am Getriebegehäuse bzw. an dessen Deckel die Steckkontakte problemlos in die entsprechenden Öffnungen des Halteteils einsetzbar sind.

Vorteilhafte Ausgestaltungen eines erfindungsgemäßen Elektromotors kann man den Unteransprüchen entnehmen.

Die Steckenden der Steckkontakte liegen vorteilhafterweise innerhalb einer Kante des Getriebegehäuses. Denn dann kann der Rand der Öffnung im Steckergehäuse vor den Steckenden der Steckkontakte vorbeilaufen, so daß bei der Montage die Steckkontakte leicht durch die Öffnung in das Steckergehäuse gebracht werden können. Trotzdem kann der Rand der Öffnung noch ohne weiteres auf dem Getriebegehäuse aufliegen.

Die in das Innere des Getriebegehäuses hineingreifenden Steckkontakte werden dort meist mit Schleiffedern verbunden, die zu einem Positionsschalter des Elektromotors gehören. Dabei kann es notwendig sein, daß mehrere der am Getriebegehäuse fixierten Steckkontakte nahe an einer' Kante des Getriebegehäuses in dessen Inneres durchgreifen. Damit die Steckenden der Steckkontakte dann nicht über eine Kante des Getriebegehäuses überstehen, erstrecken sich diese Steckkontakte zweckmäßigerweise von den Durchgriffen aus entgegengesetzt zur Richtung auf die nahe Kante des Getriebegehäuses.

Die Steckkontakte am Elektromotor sollen in bekannter Weise mit Gegensteckern verbunden werden, die in ein Gegensteckergehäuse eingesetzt sind. Für dieses Gegensteckergehäuse ist am Elektromotor eine Aufnahme zu schaffen. Es ist auch bekannt, bei elektrischen Steckverbindungen zwischen den beiden Steckergehäusen eine das Gegensteckergehäuse umgebende und an der Innenseite der im Steckergehäuse gebildeten Aufnahme anliegende Dichtung vorzusehen. Um die Wirkung dieser Dichtung bei einem erfindungsgemäßen Elektromotor voll zur Geltung kommen zu lasssen, soll das Steckergehäuse gemäß Anspruch 4 im Bereich der Steckenden, insbesondere vor den Steckenden der Steckkontakte eine in Steckrichtung offene, senkrecht dazu rundum geschlossene Kammer für ein Gegensteckergehäuse bilden. Diese Ausführung hat gegenüber dem bekannten Elektromotor, bei dem die Kammer zweiteilig von den am Deckel angespritzten Halteteil und von dem Steckergehäuse gebildet wird, den Vorteil, daß sich an der Innenseite der Kammer keine Grate oder Furchen befinden, die die Wirkung der Dichtung beeinträchtigen könnten.

Weist das Steckergehäuse einen die Öffnung in ihm umgebenden Kragen auf, so erhält man eine definierte Anlage am Getriebegehäuse. Durch die Höhe des Kragens ist der Abstand des Steckergehäuses vom Getriebegehäuse bestimmt. Weist das Getriebegehäuse wie bei dem bekannten Elektromotor ein Halteteil aus Kunststoff zur Fixierung und/oder Abstützung der am Getriebegehäuse fixierten Steckkontakte auf, so befindet sich das Halteteil vorteilhafterweise innerhalb der Öffnung des Steckergehäuses. Eine Dichtung, die man zweckmäßigerweise zwischen Steckergehäuse und dem Getriebegehäuse vorsieht, kann durch das Halteteil vorfixiert werden. Das Halteteil weist vorteilhafterweise einen umlaufenden Kragen auf. Dieser kann zur Lagefixierung von Steckergehäuse und Dichtung beitragen und außerdem die Abdichtung des Inneren des Steckergehäuses verbessern.

In den Ansprüchen 10 bis 13 ist angegeben, wie die am Getriebegehäuse fixierten Steckkontakte so eingeklemmt und geführt werden, daß insbesondere ihre Steckenden eine vorgegebene Lage sicher einnehmen.

Ein Ausführungsbeispiel eines erfindungsgemäßen Elektromotors ist in den Zeichnungen dargestellt. Anhand der Figuren dieser Zeichnungen soll die Erfindung nun näher erläutert werden.

Es zeigen

Fig.1    das Ausführungsbeispiel in einer Gesamtansicht in Richtung auf den mit einem Steckergehäuse versehenen Deckel des Getriebegehäuses,

Fig. 2    eine Ansicht auf Deckel und Steckergehäuse in Richtung des Pfeiles A aus Fig. 1,

Fig. 3    eine Ansicht des Deckels ohne Steckergehäuse in Richtung der Gesamtansicht nach Fig. 1,

Fig. 4    eine Ansicht des Deckels entgegengesetzt zur Richtung nach Fig. 3,

Fig. 5    einen Schnitt entlang der Linie V-V aus Fig. 3,

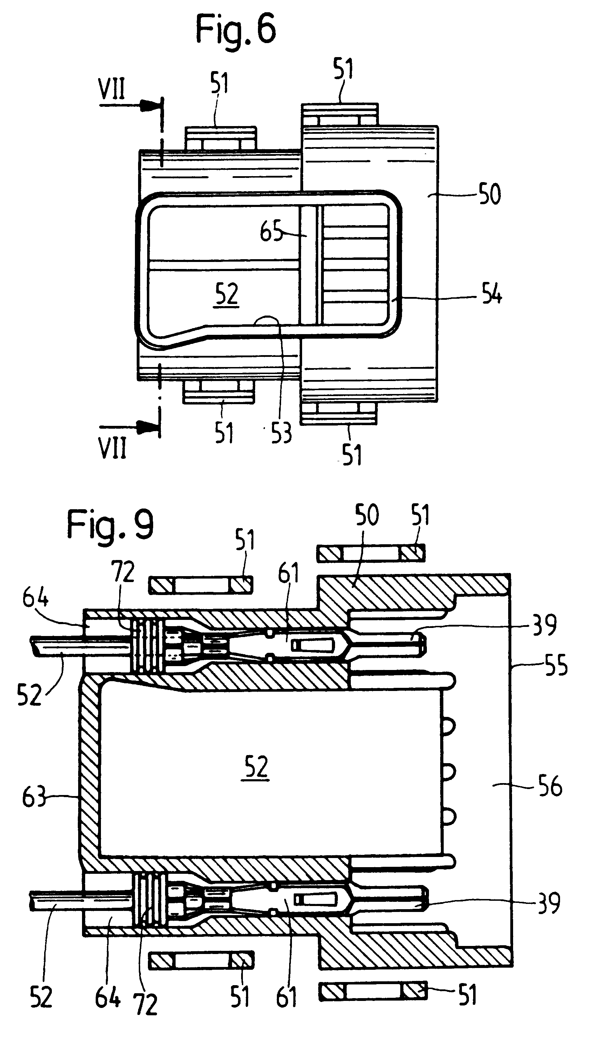

Fig. 6    eine Ansicht auf die dem Deckel zugekehrte Seite des Steckergehäuses,

Fig. 7    einen Schnitt entlang der Linie VII-VII aus Fig. 6,

Fig. 8    einen Schnitt durch das Steckergehäuse entlang der Linie VIII-VIII aus Fig. 1,

Fig. 9    einen Schnitt entlang der Linie IX-IX aus Fig. 7 und

Fig. 10   einen Schnitt durch Deckel und Steckergehäuse entlang der Linie X-X aus Fig. 1.

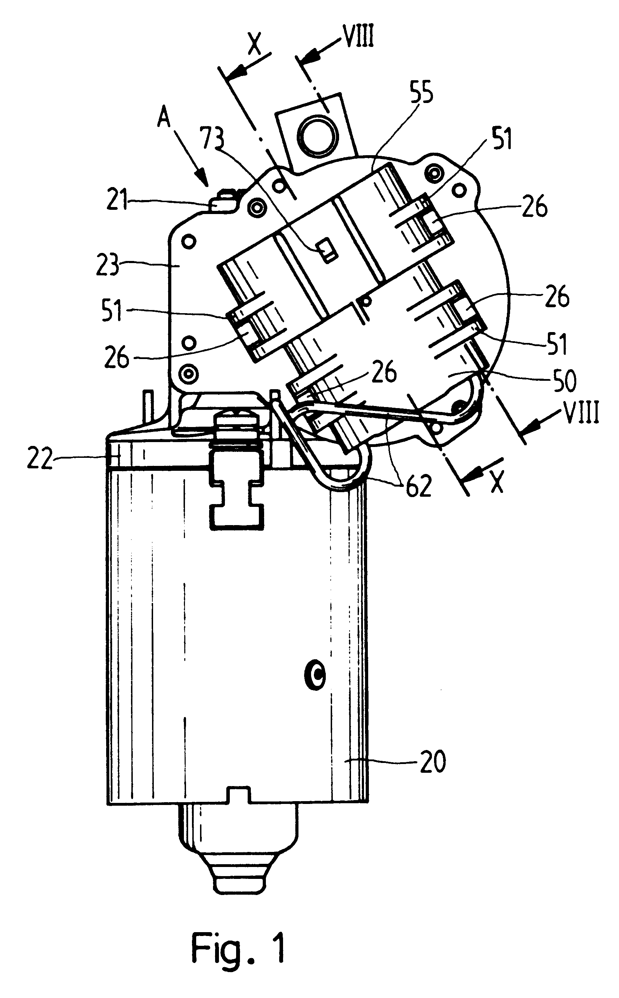

Der in Fig. 1 gezeigte Wischermotor ist zum Antrieb von Scheibenwischeranlagen in Kraftfahrzeugen vorgesehen. An das eigentliche zylindrische Motorengehäuse 20 ist ein topfförmiges Getriebegehäuse 21 mit einem Lagerschild 22 angeflanscht. Das Getriebegehäuse 21 ist durch einen aus einem Blech ausgestanzten Deckel 23 verschlossen, der als zum Getriebegehäuse 21 gehörend betrachtet wird.

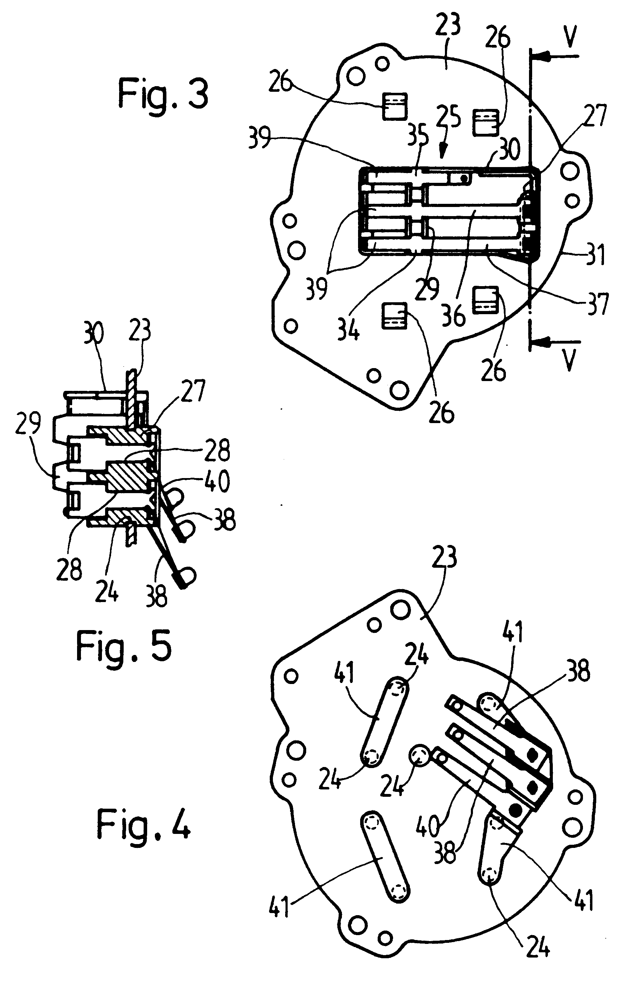

Der Deckel ist beim Ausstanzen mit verschiedenen Durchbrüchen versehen worden, von denen die Durchbrüche 24 zur Verankerung eines direkt an den metallischen Deckel angespritzten Halteteils aus Kunststoff und mehrerer Rasthaken 26 dienen. Die Durchbrüche 24 sind in Fig. 4 als kleine gestrichelte Kreise eingezeichnet.

Das Halteteil 25 besteht im wesentlichen aus drei funktionsmäßig unterscheidbaren Abschnitten. Zum ersten gehört zum Halteteil 25 ein an der Außenseite des Deckels 23 hochstehender, aber durch einen Durchbruch 24 auch auf die andere Seite des Deckels reichender Dom 27 hoch, der zwei Kanäle 28 aufweist. Der Dom 27 befindet sich nahe am Rand 31 des Deckels 23. Zum zweiten gehört zum Halteteil 25 eine Stütze 29, die sich mehr in der Mitte des Deckels 23 befindet und ebenfalls auf der Außenseite des Deckels 23 hochsteht. Als dritter Abschnitt des Halteteils 25 schließlich kann ein auf der Außenseite des Deckels 23 umlaufender und den Dom 27 und die Stütze 29 einschließender Kragen 30 betrachtet werden.

Am Halteteil sind drei Steckkontakte 35, 36 und 37 lagesicher gehalten. Die beiden Steckkontakte 36 und 37 führen in zwei senkrecht zum Deckel 23 verlaufenden Abschnitten durch die Kanäle 28 des Doms 27 auf die Innenseite des Deckels 23, wo an ihnen jeweils eine Schleiffeder 38 befestigt ist. Vom Dom 27 aus erstrecken sich die Steckkontakte 36 und 37 parallel zum Deckel 23 bis zur Stütze 29 und ragen mit ihren Steckenden 39 über diese Stütze 29 hinaus. An der Stütze 29 und damit am Fuß ihrer Steckenden sind die beiden Steckkontakte 36 und 37 in ihrer Längsrichtung und in einer Richtung parallel zum Deckel und senkrecht zu ihrer Längsrichtung fixiert. Zur Fixierung in Längsrichtung dienen seitliche Vorsprünge 34 an den Steckkontakten, die zwischen Vorsprüngen der Stütze 29 liegen.

Der Steckkontakt 35 hat an seinem Steckende 39 und im Bereich der Stütze 29 dieselbe Form wie die beiden Steckkontakte 36 und 37. Er wird deshalb durch die Stütze 29 in derselben Weise wie die Steckkontakte 36 und 37 fixiert. Anders als die Steckkontakte 36 und 37 ist er jedoch hinter der Stütze 29 zum Deckel 23 hin abgebogen und innerhalb des Kragens 30 mit dem Deckel 23 verschweißt. Auf der Innenseite des Deckels 23 ist eine Schleiffeder 40 befestigt, die somit elektrisch leitend mit dem Steckkontakt 35 verbunden ist.

Die Steckkontakte 36 und 37 verlaufen vom Dom 27 in Richtung auf das Zentrum des Deckels hin. Dadurch wird erreicht, daß ihre Steckenden 39 trotz der Nähe des Domes 27 zum Rand 31 des Deckels 23 nicht über den Deckel 23 hinausragen. Der Vorteil dieser Maßnahme wird noch bei der Beschreibung des Steckergehäuses deutlich werden.

Die vier Rasthaken 26 liegen außerhalb des Kragens 30 des Halteteils 25 und im Abstand von diesem. Jeder Rasthaken 26 greift durch einen Durchbruch 24 hindurch auf die Innenseite des Deckels 23 und ist dort über jeweils eine Kunststoffbrücke 41 einstückig mit dem Halteteil 25 verbunden. Dadurch wird das Anspritzen der Rasthaken 26 an den Deckel 23 erleichtert.

Die Rasthaken 26 dienen dazu, um ein Steckergehäuse 50 am Deckel 23 befestigen zu können. Das Steckergehäuse 50 ist ein flacher Hohlkörper, der außen insgesamt vier auf den Deckel 23 zu gerichtete Bügel 51 besitzt, von denen jeder einen Rasthaken 26 hintergreift.

Auf der dem Deckel 23 zugewandten Seite besitzt das Steckergehäuse 50 eine Öffnung 52 mit einem umlaufenden Rand 53. Die Öffnung 52 hat im wesentlichen eine rechteckförmige Kontur und ist so lang und breit, daß die Steckkontakte 36, 37 und 39 mitsamt dem Halteteil 25 durch einfaches Aufsetzen des Steckergehäuses 50 auf den Deckel 23 durch die Öffnung 52 hindurch in das Innere des Steckergehäuses 50 gelangen können. Die Öffnung 52 ist unmittelbar von einem Kragen 54 umgeben, dessen Höhe sich nach dem Abstand des Steckergehäuses 50 vom Deckel 23 richtet und der vor den Steckenden 39 der Steckkontakte vorbeiläuft und sich ganz innerhalb der Außenkontur des Deckels 23 befindet. Weil die Steckenden 39 nicht über den Deckel 23 hinausragen, ist somit bei guter Abdichtung zwischen Deckel 23 und Steckergehäuse 50 dessen einfache Montage möglich. In Verbindung mit einem nicht dargestellten Gegenstecker, dessen Gehäuse mit dem Steckergehäuse 50 dicht koppelbar ist, wird das Halteteil 25 völlig umschlossen.

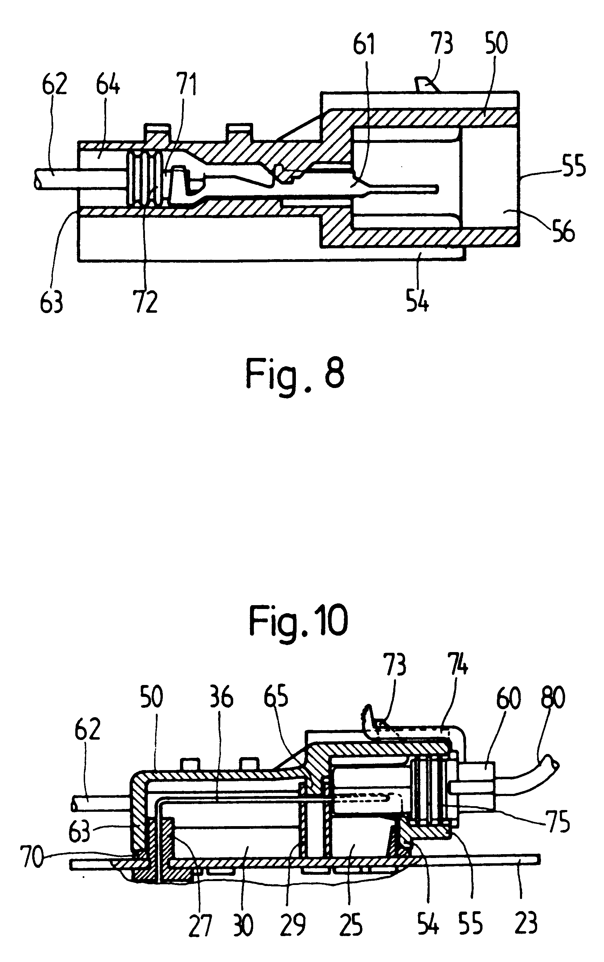

Die bei einer Ansicht in Richtung des Pfeiles A erkennbare Stirnseite 55 des Steckergehäuses 50 befindet sich im Abstand vor der Öffnung 52 und ist offen, so daß durch sie hindurch eine Kammer 56 des Steckergehäuses für ein Gegensteckergehäuse 60, das man in Fig. 10 erkennen kann, zugänglich ist.

Wichtig ist nun, daß die Kammer 56 hinter der Stirnseite 55, senkrecht zur Steckrichtung des Gegensteckergehäuses 60 betrachtet, rundum geschlossen ist und die Außenwände allein durch das Steckergehäuse 50 gebildet werden. Dadurch erhält man eine ebene Innenseite der Kammer 56 ohne Grate oder Unterbrechungen.

Außer den Steckkontakten 35, 36 und 37 ragen in die Kammer 56 noch zwei Steckkontakte 61 hinein, die in seitlich der Öffnung 52 verlaufenden Kanälen 64 des Steckergehäuses 50 liegen und an die jeweils ein Kabel 62 angeschlossen ist, das den jeweiligen Kanal an der der Stirnseite 55 gegenüberliegenden Stirnseite 63 des Steckergehäuses 50 verläßt. Außer an den beiden Kanälen ist die Stirnseite 63 geschlossen. Die Kabel 62 sind Motorstromzuleitungen, die in das Gehäuse 20 des Elektromotors hineinführen.

Am hinteren Ende der Kammer 56 ist an die Oberseite des Steckergehäuses 50 ein Steg 56 angeformt, der nach der Montage des Steckergehäuses am Deckel 23 über der Stütze 29 des Halteteils 25 liegt. Zwischen der Stütze 29 und dem Steg 65 sind die Steckkontakte 35, 36 und 37 eingeklemmt.

Bei der Montage werden zunächst die Steckkontakte 36 und 37 in die Kanäle 28 des Halteteils eingeführt und auf die Stütze 29 aufgelegt. Der Steckkontakt 39 wird auf die Stütze 29 aufgelegt und mit dem Deckel 23 verschweißt. Auf der Innenseite des Deckels 23 werden mit Schleiffedern 38 und 40 an den Steckkontakten 36 und 37 bzw. am Deckel 23 befestigt. Um eine sehr gute Abdichtung zwischen dem Deckel 23 und dem Kragen 54 des Steckergehäuses 50 zu erhalten, wird um den Kragen 30 des Halteteils 25 herum eine Dichtung 70 auf den Deckel 23 aufgelegt. Danach wird das Steckergehäuse 50 mit seiner Öffnung 52 über das Halteteil 25 gestülpt, wobei die Dichtung 70 etwas zusammengedrückt wird, bis die Bügel 51 an den Rasthaken 26 eingeschnappt sind. Der Kragen 30 des Halteteils 25 und der Rand 53 der Öffnung 52 liegen unmittelbar aneinander. Wie man aus Fig. 10 ersieht, kann nun weder Staub noch Spritzwasser zwischen dem Deckel 23 und dem Steckergehäuse 50 hindurch zu den Steckkontakten und durch die Kanäle 28 des Halteteils 25 hindurch in das Innere des Getriebegehäuses 21 gelangen.

Nach der Befestigung des Steckergehäuses 50 werden die Steckkontakte 61 mit den angeschlossenen Kabeln 62 von der Stirnseite 63 aus in die Kanäle 64 des Steckergehäuses 50 eingeschoben und darin verrastet. An jedem Steckkontakt 61 ist mit einem Bund 71 eine das Kabel 62 umgebende Dichtung 72 festgeklemmt, die den jeweiligen Kanal 64 nach außen verschließt. Somit kann auch durch die Kanäle 64 kein Staub und kein Wasser in das Innere des Steckergehäuses 50 gelangen.

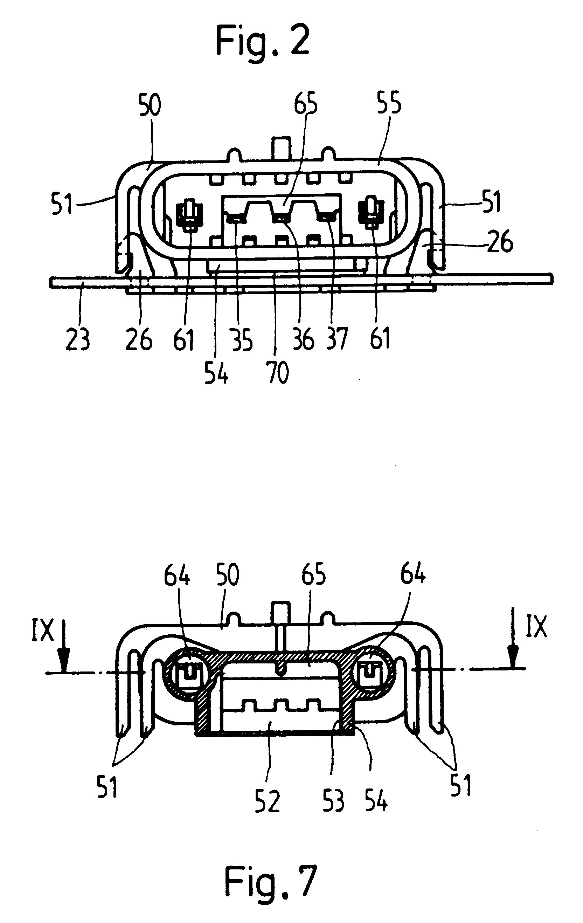

Wie man aus Fig. 2 erkennt, liegen die Steckkontakte 35, 36 37 und 61 alle auf gleicher Höhe. Zur Verbindung mit dem Bordnetz eines Kraftfahrzeugs wird nun das Gegensteckergehäuse 60 von der Stirnseite 55 des Steckergehäuses 50 aus bis zum Steg 65 in die Kammer 56 hineingeschoben. Dabei gelangen die Steckenden 39 der Steckkontakte mit im Gegensteckergehäuse fixierten, nicht näher dargestellten Gegensteckern in elektrischen Kontakt. Ein über das Steckergehäuse 50 greifender und hinter einer Nase 73 einrastender Bügel 74 des Gehäuses 60 sichert dieses gegen ein unbeabsichtigtes Lösen. Das Gegensteckergehäuse 60 ist von einer Dichtung 75 umgeben, die, nachdem das Gehäuse 60 in das Steckergehäuse 50 eingeführt ist, hinter der Stirnseite 55 an der Innenseite der Kammer 56 anliegt. Weil sich, wie schon erläutert, an der Innenseite der Kammer 56 weder Grate noch Furchen befinden, wird durch die Dichtung 75 eine sehr gute Wirkung erzielt. Nun kann also auch nicht zwischen dem Steckergehäuse 50 und dem Gegensteckergehäuse 60 hindurch Dreck zu den Steckkontakten und Gegensteckern gelangen.

Wie an sich bekannt und ähnlich wie die Steckkontakte 61 klemmen die im Gehäuse 60 fixierten Gegenstecker jeweils eine Dichtung fest, die das an den jeweiligen Gegenstecker angeschlossene Kabel 80 umgibt und den Durchgang im Gegensteckergehäuse 60 abdichtet, in dem sich der jeweilige Gegenstecker befindet. Somit kann auch durch die Durchgänge im Gegensteckergehäuse 60 kein Schmutz in das Steckergehäuse 50 und zu den Steckkontakten und Gegensteckern gelangen. Die elektrische Verbindung zwischen Steckkontakten und Gegensteckern ist deshalb in hohem Maße gegen Verschmutzung und Korrosion geschützt. Auch eine Verschmutzung des Getriebegehäuseinneren wird wirksam vermieden.

**Patentansprüche**

1. Elektromotor, insbesondere Wischermotor zum Antrieb einer Scheibenwischeranlage in einem Kraftfahrzeug, mit einem Getriebegehäuse (21) einschließlich Deckel (23) und mit mehreren, insbesondere im wesentlichen parallel zum Getriebegehäuse (21) angeordneten Steckkontakten (35, 36, 37, 61), von denen einzelne (35, 36, 37) am Getriebegehäuse (21), insbesondere am Deckel (23), mittels eines Halteteils (25) fixiert sind und wenigstens ein anderer (61) mit einer Motorstromzuleitung (62) verbunden ist und in einem Steckergehäuse (50) sitzt, dadurch gekennzeichnet, daß das Steckergehäuse (50) eine Öffnung (52) mit umlaufendem Rand (53) aufweist, durch die die am Getriebegehäuse (21) fixierten Steckkontakte (35, 36, 37) in das Steckergehäuse (50) gelangen, daß das Steckergehäuse (50) das Halteteil (25) völlig umschließt und um die Öffnung (52) herum dicht am Getriebegehäuse (21) anliegt.

2. Elektromotor nach Anspruch 1, dadurch gekennzeichnet, daß die Steckenden (39) der Steckkontakte (35, 36, 37) innerhalb einer Kante (31) des Getriebegehäuses (21) liegen und daß der Rand (53) der Öffnung (52) im Steckergehäuse (50) vor den Steckenden (39) der Steckkontakte (35, 36, 37) vorbeiläuft.

3. Elektromotor nach Anspruch 1 oder 2, dadurch gekennzeichnet, daß mehrere der am Getriebegehäuse (21) fixierten Steckkontakte (36, 37) nahe an einer Kante (31) des Getriebegehäuses (21) in dessen Inneres durchgreifen und daß sich diese Steckkontakte (36, 37) von den Durchgriffen (28) aus entgegengesetzt zur Richtung auf die nahe Kante (31) des Getriebegehäuses (21) hin erstrecken.

4. Elektromotor nach einem der Ansprüche 1 bis 3, dadurch gekennzeichnet, daß das Steckergehäuse (50) im Bereich der Steckenden (39), insbesondere vor den Steckenden (39) der Steckkontakte (35, 36, 37, 61) eine in Steckrichtung offene, senkrecht dazu rundum geschlossene Kammer (56) für ein Gegensteckergehäuse (60) bildet.

5. Elektromotor nach einem der Ansprüche 1 bis 4, dadurch gekennzeichnet, daß zwischen dem Steckergehäuse (50) und dem Getriebegehäuse (21) eine Dichtung (70) eingefügt ist.

6. Elektromotor nach einem der Ansprüche 1 bis 5, dadurch gekennzeichnet, daß das Steckergehäuse (50) eine die Öffnung (52) in ihm umgebenden Kragen (54) aufweist.

7. Elektromotor nach einem der Ansprüche 1 bis 6, dadurch gekennzeichnet, daß das Getriebegehäuse (21) ein Halteteil (25) aus Kunststoff zur Fixierung und/oder Abstützung der am Getriebegehäuse (21) fixierten Steckkontakte (35, 36, 37) aufweist und daß sich das Halteteil (25) innerhalb der Öffnung (52) des Steckergehäuses (50) befindet.

8. Elektromotor nach Anspruch 7, dadurch gekennzeichnet, daß die Dichtung (70) zwischen dem Steckergehäuse (50) und dem Getriebegehäuse (21) durch das Halteteil (25) vorfixiert ist.

9. Elektromotor nach Anspruch 7 oder 8, dadurch gekennzeichnet, daß das Halteteil (25) einen umlaufenden Kragen (30) aufweist.

10. Elektromotor nach einem der Ansprüche 7 bis 9, dadurch gekennzeichnet, daß die am Getriebegehäuse (21) fixierten Steckkontakte (35, 36, 37) am Fuß ihrer Steckenden (39) zwischen einer Stütze (29) des Halteteils (25) und einer Wand (65) des Steckergehäuses (50) eingeklemmt sind.

11. Elektromotor nach einem der Ansprüche 7 bis 10, dadurch gekennzeichnet, daß die am Getriebegehäuse (21) fixierten Steckkontakte (35, 36, 37) am Fuß ihrer Steckenden (39) an einem parallel zum Getriebegehäuse (21) verlaufenden Abschnitt durch das Halteteil (25) in einer Richtung parallel zum Getriebegehäuse (21) und senkrecht zur Längsrichtung der Steckkontakte (35, 36, 37) fixiert sind.

12. Elektromotor nach einem der Anprüche 7 bis 11, dadurch gekennzeichnet, daß die am Getriebegehäuse (21) fixierten Steckkontakte (35, 36, 37) am Fuß ihrer Steckenden (39) durch das Halteteil (25) in ihrer Längsrichtung fixiert sind.

13. Elektromotor nach Anspruch 12, dadurch gekennzeichnet, daß die Steckkontakte (35, 36, 37) zur Längsfixierung an wenigstens einer Seitenkante einen Vorsprung (34) aufweisen.

14. Elektromotor nach einem der Asnprüche 7 bis 13, dadurch gekennzeichnet, daß das Halteteil (25) direkt an einen metallenen Teil des Getriebegehäuses (21), insbesondere an den Deckel (23) des Getriebegehäuses (21) angespritzt ist.

15. Elektromotor nach Anspruch 14, dadurch gekennzeichnet, daß das Getriebegehäuse (21) im Abstand zum Halteteil (25) Befestigungsmittel (26) für das Steckergehäuse (50) aufweist und daß die Befestigungsmittel (26) durch sich auf der Innenseite des Getriebegehäuses (21) befindliche Kunststoffbrücken (41) mit dem Halteteil (25) verbunden sind.

**Claims**

1. An electric motor, in particular a wiper motor for driving a windscreen wiper system on a motor vehicle, comprising a gear housing (21) including a lid (23) and several plug contacts (35, 36, 37, 61) arranged substantially in parallel to the gear housing (21), some of which plug contacts (35, 36, 37) are fixed on the gear housing (21), in particular on the lid (23), by means of a holding member (25) and of which contacts at least one (61) is connected with a motor current lead (62) and is fitted in a plug housing (50), characterised in that the plug housing (50) has an opening (52) with a circumferential rim (53) through which the plug contacts (35, 36, 37) fixed on the gear housing (21) reach the plug housing (50), in that the plug housing (50) completely encompasses the holding member (25) and around the opening (52) closely rests against the gear housing (21).

2. An electric motor according to claim 1, characterised in that the plug-in terminations (39) of the plug contacts (35, 36, 37) are positioned within an edge (31) of the gear housing (21) and that the rim (53) of the opening (52) in the plug housing (50) passes in front of the plug in terminations (39) of the plug contacts (35, 36, 37).

3. An electric motor according to claim 1 or 2, characterised in that several of the plug contacts (36, 37) fixed on the gear housing (21) grip into the interior of the gear housing (21) closely to an edge (31) and that the said plug contacts (36, 37) extend from the passages (28) in a direction opposite to the close edge (31) of the gear housing (21).

4. An electric motor according to one of claims 1 to 3, characterised in that in the area of the plug-in terminations (39), in particular in front of the plug-in terminations (39) of the plug contacts (35, 36, 37, 61) the plug housing (50) forms a chamber (56) for a mating plug housing (60), which chamber is open in the plug-in direction and perpendicularly thereto closed all around.

5. An electric motor according to one of claims 1 to 4, characterised in that between the plug housing (50) and the gear housing (21) a sealing (70) is inserted.

6. An electric motor according to one of claims 1 to 5, characterised in that the plug housing (50) has a collar (54) surrounding the opening (52) in the plug housing.

7. An electric motor according to one of claims 1 to 6, characterisid in that the gear housing (21) includes a plastic holding member (25) for fixing and/or supporting the plug contacts (35, 36, 37) fastened on the gear housing (21) and that the holding member (25) is positioned within the opening (52) of the gear housing (50).

8. An electric motor according to calim 7, characterised in that the sealing (70) between the plug housing (50) and the gear housing (21) is prefixed by a holding member (25).

9. An electric motor according to claim 7 or 8, characterised in that the holding member (25) has a circumferential collar (30).

10. An electric motor according to one of claims 7 to 9, characterised in that the plug contacts (35, 36, 37) fixed on the gear housing (21) at the foot of their plug-in terminations are clamped between a support (29) of the holding member (25) and a wall (65) of the plug housing (50).

11. An electric motor according to one of claims 7 to 10, characterised in that the plug contacts (35, 36, 37) fastend on the gear housing (21) are fixed by the holding member (25) at the foot of their plug-in terminations (39) on a portion parallel to the gear housing (21) in a direction parallel to the gear housing (21) and perpendicular to the longitudinal direction of the plug contacts.

12. An electric motor according to one of claims 7 to 11, characterised in that the plug contacts (35, 36, 37) fixed on the gear housing (21) are secured in their longitudinal direction at the foot of their plug-in terminations (39) by means of the holding member (25).

13. An electric motor according to claim 14, characterised in that the plug contacts (35, 36, 37) have a projection (34) at least on one lateral edge in order to be fixed in the longitudinal direction.

14. An electric motor according to one of claims 7 to 13, characterised in that the holding member (25) is directly injection-moulded onto a metallic part of the gear housing (21), in particular to the lid (23) of the gear housing (21).

15. An electric motor according to claim 14, characterised in that spaced apart from the holding member (25) the gear housing (21) has fastening means (26) for the plug housing (50) and that the fastening means (26) are connected with the holding member (25) by means of plastic bridges (41) positioned at the inside of the gear housing (21).

**Revendications**

1. Moteur électrique, notamment moteur de lave-glace, servant à entraîner une installation de lave-glace dans un véhicule automobile, comportant un boîtier de transmission (21) y compris un couvercle (23) et plusieurs contacts à enfichage (35,36,37,61), disposés notamment en étant sensiblement parallèles au boîtier de transmission (21), et dont certains (35,36,37) sont fixés sur le boîtier de transmission (21), notamment sur le couvercle (23), à l'aide d'une partie de retenue (25) et au moins un autre (61) est raccordé à un conducteur d'alimentation en courant (62) du moteur et est logé dans un boîtier de connecteur (50), caractérisé en ce que le boîtier de connecteur (50) possède une ouverture (52) comportant un bord circonférentiel (53), à travers lequel les contacts à enfichage (35, 36,37) fixés sur le boîtier de transmission (21), pénètrent dans le boîtier de connecteur (50), et que le boîtier de connecteur (50) entoure complètement la partie de retenue (25) et s'applique d'une manière étanche contre le boîtier de transmission (21) autour de l'ouverture (52).

2. Moteur électrique selon la revendication 1, caractérisé en ce que les extrémités enfichables (39) des contacts à enfichage (35,36,37) sont situées à l'intérieur d'un bord (31) du boîtier de transmission (21) et que le bord (53) de l'ouverture (52) située dans le boîtier de connecteur (50) se déplace devant les extrémités enfichables (39) des contacts à enfichage (35,36,37).

3. Moteur électrique selon la revendication 1 ou 2, caractérisé en ce que plusieurs contacts à enfichage (36,37), fixés sur le boîtier de transmission (21), pénètrent à l'intérieur du boîtier de transmission (21), à proximité d'un bord (31) de ce boîtier et que ces contacts à enfichage (36,37) s'étendent à partir des passages traversants (28) en sens opposé à la direction tournée vers le bord voisin (31) du boîtier de transmission (21).

4. Moteur électrique selon l'une des revendications 1 à 3, caractérisé en ce que le boîtier de connecteur (50) forme, au voisinage des extrémités enfichables (39), notamment devant les extrémités enfichables (39) des contacts à enfichage (35,36,37,61), une chambre (56), qui est ouverte dans la direction d'enfichage et est fermée sur son pourtour perpendiculairement à cette direction, pour un boîtier de connecteurs antagonistes (60).

**5.** Moteur électrique selon l'une des revendications 1 à 4, caractérisé en ce qu'une garniture d'étanchéité (70) est insérée entre le boîtier de connecteur (50) et le boîtier de transmission (21).

**6.** Moteur électrique selon l'une des revendications 1 à 5, caractérisé en ce que le boîtier de connecteur (50) possède un collet (54) qui entoure l'ouverture (52) ménagée dans ce boîtier.

**7.** Moteur électrique selon l'une des revendications 1 à 6, caractérisé en ce que le boîtier de transmission (21) comporte une partie de retenue (25) réalisée en matière plastique et servant à fixer et/ou supporter les contacts à enfichage (35,36,37) fixés sur le boîtier de transmission (21), et que la partie de retenue (25) est située à l'intérieur de l'ouverture (52) du boîtier de connecteur (50).

**8.** Moteur électrique selon la revendication 7, caractérisé en ce que la garniture d'étanchéité (70) est fixée au préalable, par la partie de retenue (25), entre le boîtier de connecteur (50) et le boîtier de transmission (21).

**9.** Moteur électrique selon la revendication 7 ou 8, caractérisé en ce que la partie de retenue (25) possède un collet circonférentiel (30).

**10.** Moteur électrique selon l'une des revendications 7 à 9, caractérisé en ce que les contacts à enfichage (35,36,37) fixés sur le boîtier de transmission (21) sont bloqués par serrage, au niveau du pied de leurs extrémités enfichables (39), entre un support (29) de la partie de retenue (25) et une paroi (65) du boîtier de connecteur (50).

**11.** Moteur électrique selon l'une des revendications 7 à 10, caractérisé en ce que les contacts à enfichage (35,36,37) fixés sur le boîtier de transmission (21) sont fixés, au niveau du pied de leurs extrémités enfichables (39), sur une section parallèle au boîtier de transmission (21), à l'aide de la partie de retenue (25), dans une direction parallèle au boîtier de transmission (21) et perpendiculairement à la direction longitudinale des contacts à enfichage (35,36,37).

**12.** Moteur électrique selon l'une des revendications 7 à 11, caractérisé en ce que les contacts à enfichage (35,36,37) fixés sur le boîtier de transmission (21) sont fixés dans leur direction longitudinale, sur le pied de leurs extrémités enfichables (39), par la partie de retenue (25).

**13.** Moteur électrique selon la revendication 12, caractérisé en ce que les contacts à enfichage (35,36,37) possèdent un appendice saillant (34) pour leur fixation longitudinale sur au moins un bord latéral.

**14.** Moteur électrique selon l'une des revendications 7 à 13, caractérisé en ce que la partie de retenue (25) est fixée directement par moulage sur une partie métallique du boîtier de transmission (21), notamment sur le couvercle (23) du boîtier de transmission (21).

**15.** Moteur électrique selon la revendication 14, caractérisé en ce que le boîtier de transmission (21) comporte, à distance de la partie de retenue (25), des moyens de fixation (26) pour le boîtier de connecteur (50), et que les moyens de fixation (26) sont raccordés à la partie de retenue (25) par des étriers en matière plastique (41) situés sur la face intérieure du boîtier de transmission (21).

Fig. 1

# Fig. 2

# Fig. 7

Fig. 3

Fig. 5

Fig. 4

## Fig. 6

## Fig. 9

Fig. 8

Fig. 10